# EUROPEAN PATENT APPLICATION

(11) **EP 2 572 836 A1**
(43) Date of publication of application: **27.03.2013**
(21) Application number: 12153592.6
(22) Date of filing: 02.02.2012
(51) Int. Cl.: B25J 9/00

(54) **Robot apparatus, robot system, and method for manufacturing packaged product of string-shaped object**

(30) Priority: 20.09.2011 JP 2011204536
(71) Applicant: Kabushiki Kaisha Yaskawa Denki, Kitakyushu-shi, Fukuoka 806-0004 (JP)
(72) Inventor: Takata, Hiroshi, Fukuoka, 806-0004 (JP); Tatebe, Shingo, Fukuoka, 806-0004 (JP)
(74) Representative: Viering, Jentschura & Partner

(57) **Abstract**

A robot apparatus (24) includes a turning base (42), a lower arm (44), an upper arm (46), a wrist unit (48), a hand (50), and a controller (36). The hand (50) is provided on the wrist unit (48) to hold or release a longitudinally intermediate portion of a noodle lump (12). The controller (36) controls operations of the turning base (42), the lower arm (44), the upper arm (46), the wrist unit (48), and the hand (50). The controller (36) controls the turning base (42), the lower arm (44), the upper arm (46), and the wrist unit (48) so that the hand (50) moves the noodle lump (12). obliquely upward at least in a part of a path from a holding position at which the noodle lump (12) is held and a releasing position at which the noodle lump (12) is released.

## Description

### BACKGROUND OF THE INVENTION

### 1. Field of the Invention

Embodiments of the disclosure relate to a robot apparatus, a robot system, and a method for manufacturing a packaged product of a string-shaped object.

### 2. Description of the Related Art

Japanese Unexamined Patent Application Publication No. 5-304870 discloses a technology that relates to a production apparatus (noodle making machine) that produces string-shaped objects (noodle strips) and places the string-shaped objects on a conveying device (chain conveyor). According to this technology, noodle dough is supplied to and accumulated in a noodle-dough storing section, and is caused to pass between first and second rollers while the first and second rollers rotate. The first and second rollers perform a predetermined rolling process in which the noodle dough is formed into a noodle sheet. The noodle sheet is guided to a position upstream of a position between the second roller and a third roller. Then, the noodle sheet formed by the rolling process is supplied to a pair of cutting rollers, which cut the noodle sheet into string-shaped objects. The string-shaped objects are caused to fall onto the conveying device, which conveys the string-shaped objects toward an outlet.

In general, the string-shaped objects that have been conveyed by the conveying device are manually divided by a worker into lumps suitable as units in which the string-shaped objects are sold. The lumps of string-shaped objects are packaged in individual packages by a packaging device. In this case, the string-shaped objects are continuously conveyed at a predetermined speed, and the worker successively picks up lumps of string-shaped objects, each lump including an optimum amount of string-shaped objects, and places the lumps of string-shaped objects into, for example, a receiving hole located above the packaging device at a suitable timing. Such work requires speed and skill. In addition, the work imposes an immense physical burden on the worker and causes great fatigue.

### SUMMARY OF THE INVENTION

The present disclosure has been made in view of the above-described problems, and an object of the present disclosure is to provide a robot apparatus, a robot system, and a method for manufacturing a packaged product of a string-shaped object with which the workload of the worker can be reduced and the productivity can be increased.

According to an aspect of the disclosure, a robot apparatus that transports a string-shaped object includes a robot arm, a robot hand provided on the robot arm, the robot hand holding or releasing a longitudinally intermediate portion of the string-shaped object, and a controller that controls operations of the robot arm and the robot hand. The controller controls the robot arm so that the robot hand moves obliquely upward at least in a part of a path from a holding position at which the string-shaped object is held to a releasing position at which the string-shaped object is released.

According to another aspect of the disclosure, a robot system that transports a string-shaped object includes a conveying device that conveys the string-shaped object in a certain direction, a robot apparatus that transports the string-shaped object conveyed by the conveying device in the certain direction, and a receiving portion arranged downstream of the conveying device in the certain direction and above the conveying device, the receiving portion receiving the string-shaped object transported by the robot apparatus.

According to another aspect of the disclosure, a method for manufacturing a packaged product of a string-shaped object by packaging the string-shaped object with a packaging material includes producing and feeding the string-shaped object, conveying the string-shaped object that has been produced and fed in a certain direction, transporting the string-shaped object with the robot hand from a holding position at which the string-shaped object is held to a releasing position at which the string-shaped object is released and which is positioned downstream of the holding position in the certain direction and above the holding position, receiving the string-shaped object that has been transported through a receiving portion positioned below the releasing position, and packaging the string-shaped object that has been received through the receiving portion with a packaging material to form the packaged product of the string-shaped object. The transporting of the string-shaped object includes holding a longitudinally intermediate portion of the string-shaped object that has been conveyed in the certain direction at the holding position, and moving the string-shaped object that has been held obliquely upward at least in a part of a path from the holding position to the releasing position.

With the robot apparatus, the robot system, and the method for manufacturing the packaged product of the string-shaped object according to the aspects of the present disclosure, the workload of the worker can be reduced and the productivity can be increased.

### BRIEF DESCRIPTION OF THE DRAWINGS

Fig. 1 is a schematic system diagram illustrating the overall structure of a manufacturing system according to an embodiment.

Fig. 2 is a plan view illustrating the structure of a robot body.

Fig. 3 is a plan view illustrating the structure of a hand.

Fig. 4 is a perspective view illustrating the structure of a guide member and a receiving member.

Fig. 5 is a schematic plan view illustrating a packaged noodle product.

Fig. 6 is a schematic diagram illustrating a method for manufacturing the packaged noodle product.

Fig. 7 is a diagram illustrating the structure of Fig. 6 viewed in the direction shown by arrow VII.

Fig. 8 is another schematic diagram illustrating the method for manufacturing the packaged noodle product.

Fig. 9 is another schematic diagram illustrating the method for manufacturing the packaged noodle product.

Fig. 10 is another schematic diagram illustrating the method for manufacturing the packaged noodle product.

Fig. 11 is another schematic diagram illustrating the method for manufacturing the packaged noodle product.

Fig. 12 is another schematic diagram illustrating the method for manufacturing the packaged noodle product.

Fig. 13 is a diagram illustrating the structure of Fig. 12 viewed in the direction shown by arrow XIII.

Fig. 14 is another schematic diagram illustrating the method for manufacturing the packaged noodle product.

Fig. 15 is a diagram illustrating the structure of Fig. 14 viewed in the direction shown by arrow XV.

### DESCRIPTION OF THE EMBODIMENTS

An embodiment will now be described with reference to the drawings.

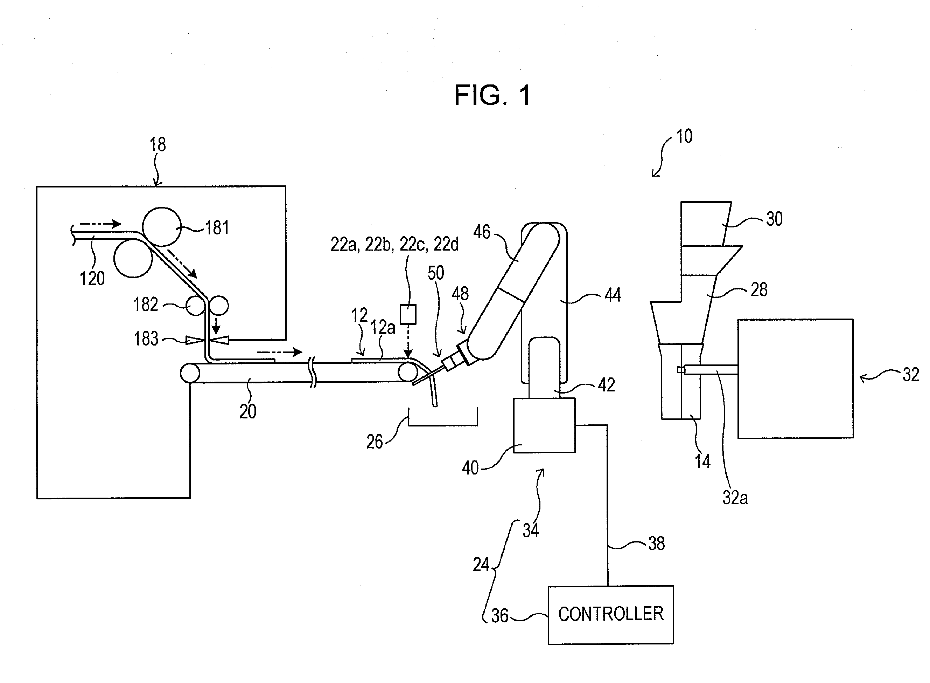

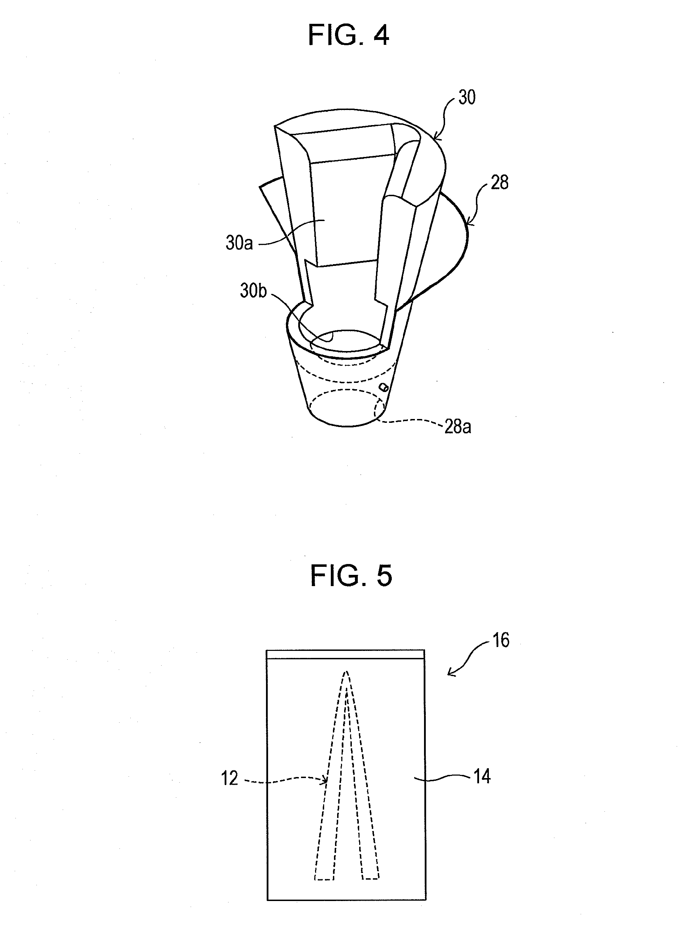

Referring to Fig. 1, a manufacturing system 10 (robot system) according to the present embodiment is a system for manufacturing a packaged noodle product 16 (packaged product of a string-shaped object, see Fig. 5 described below). The packaged noodle product 16 is manufactured by transporting a noodle lump 12, which is a lump of string-shaped noodle strips 12a (string-shaped objects), such as udon noodles, soba noodles, and ramen noodles, and packaging the noodle lump 12 in a packaging bag 14 (packaging material). The manufacturing system 10 includes a noodle making machine 18 (production apparatus), a conveyor 20 (conveying device), a plurality of sensors, which are four sensors 22a, 22b, 22c, and 22d in this example, a robot apparatus 24, a noodle strip receiver 26, a guide member 30, a receiving member 28, and a packaging device 32.

The noodle making machine 18 receives a band-shaped noodle sheet 120 produced in a previous process (not shown or explained), forms the noodle sheet 120 into a plurality of noodle strips 12a with predetermined width and length (noodle lump 12), and places the noodle strips 12a on the conveyor 20. The noodle making machine 18 includes a pair of rollers 181 that face each other with a gap therebetween, a pair of comb-shaped cutting rollers 182, and a cutter unit 183. The noodle sheet 120 is rolled through the rollers 181. The noodle sheet 120 that has been rolled through the rollers 181 is cut by the cutting rollers 182 in a length direction into the plurality of string-shaped noodle strips 12a having a predetermined width. The noodle strips 12a produced by the cutting rollers 182 are cut by the cutter unit 183 in a width direction at a predetermined length.

The conveyor 20 receives the noodle lump 12 produced by the noodle making machine 18 and conveys the noodle lump 12 rightward (in a certain direction, rightward in Fig. 1) along a certain conveying path. The conveying path extends in a length direction (left-right direction in Fig. 1) on a top surface (conveyance surface) that extends along the horizontal direction.

The sensors 22a to 22d are arranged near the conveying path along which the noodle lump 12 is conveyed by the conveyor 20. In this example, the sensors 22a to 22d are arranged above a downstream section of the conveying path (right section of the conveyor 20) at a certain pitch along the width direction of the conveyor 20 (direction perpendicular to the plane of Fig. 1). The sensors 22a to 22d detect the noodle lump 12 that is being conveyed downstream along the conveying path by the conveyor 20.

The robot apparatus 24 includes a robot body 34 and a controller 36. The robot body 34 holds and transports the noodle lump 12 that has been conveyed by the conveyor 20 to an end point of the conveying path, that is, the right end of the conveyor 20 in this example. The controller 36 controls the operation of the robot body 34. The robot body 34 and the controller 36 are connected to each other with a cable 38, or wirelessly, so as to allow intercommunication therebetween. The controller may instead be provided on the robot body 34.

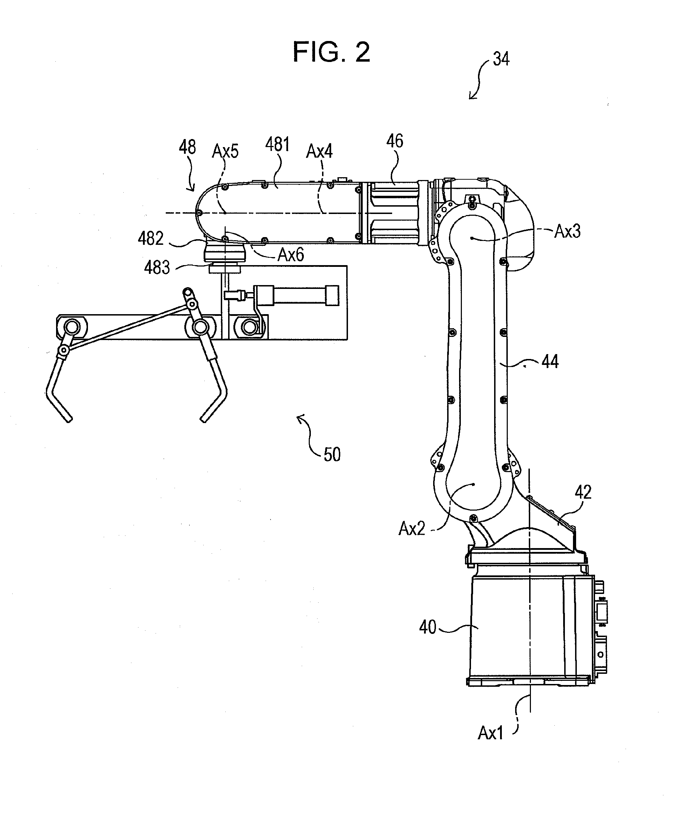

In this example, the robot body 34 is a six-axis vertical articulated robot, and includes a base 40, a turning base 42, a lower arm 44, an upper arm 46, a wrist unit 48, and a hand 50 (robot hand), as illustrated in Figs. 1 and 2.

The base 40 is fixed to an installation surface, such as the floor, with anchor bolts (not shown).

The turning base 42 is attached to the base 40 in a manner such that the turning base 42 is capable of turning around an S-axis Ax1, which is a vertical axis.

The lower arm 44 is attached to the turning base 42 in a manner such that the lower arm 44 is rotatable around an L-axis Ax2, which is a horizontal axis.

The upper arm 46 is attached to the lower arm 44 at a distal end thereof in a manner such that the upper arm 46 is rotatable around a U-axis Ax3, which is also a horizontal axis. ,

The wrist unit 48 includes a wrist body 481, a swinging body 482, and a rotating body 483. The wrist body 481 is attached to the upper arm 46 at a distal end thereof in a manner such that the wrist body 481 is rotatable around an R-axis Ax4, which is a central axis of the upper arm 46 that extends in the length direction thereof. The swinging body 482 is attached to the wrist body 481 at a distal end thereof in a manner such that the swinging body 482 is rotatable around a B-axis Ax5 that is substantially orthogonal to the R-axis Ax4. The rotating body 483 is attached to the swinging body 482 at a distal end thereof in a manner such that the rotating body 483 is rotatable around a T-axis Ax6 that is substantially orthogonal to the B-axis Ax5.

The turning base 42, the lower arm 44, the upper arm 46, and the wrist unit 48 correspond to a robot arm described in the claims.

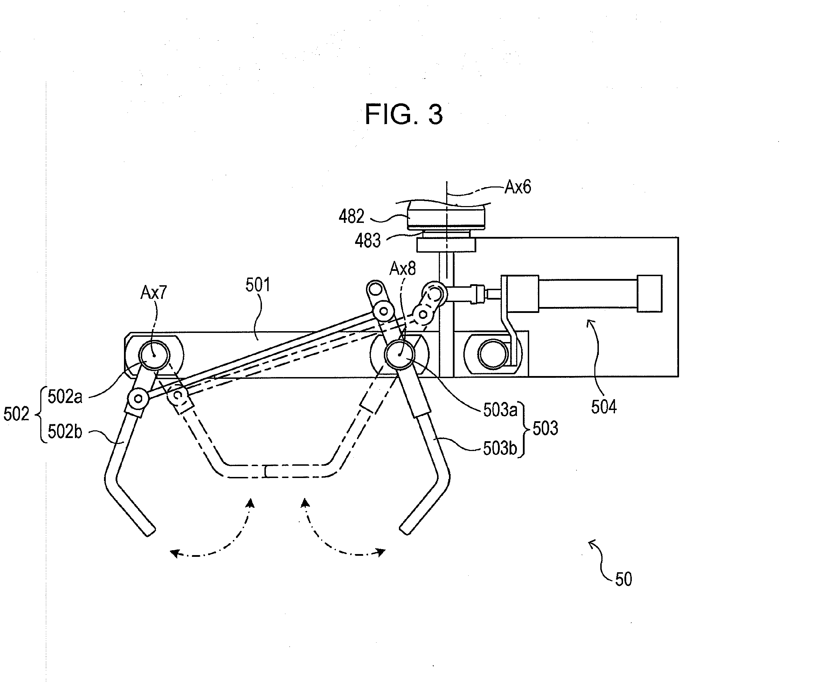

The hand 50 is attached to the rotating body 483 in the wrist unit 48 at a distal end thereof. The hand 50 holds or releases a longitudinally intermediate portion of the noodle lump 12 that has been conveyed to the end point of the conveying path by the conveyor 20. As illustrated in Fig. 3, the hand 50 includes a base link 501 connected to the rotating body 483 at the distal end thereof, a first link member 502, a second link member 503, and an air cylinder 504 (actuator) that rotates the first and second link members 502 and 503.

The first link member 502 is provided at a distal end (one end) of the base link 501 and includes a first rotating shaft 502a and a first link 502b. The first link 502b is connected to the first rotating shaft 502a and rotates together with the first rotating shaft 502a around a first rotation axis Ax7, which is substantially orthogonal to the T-axis Ax6, with respect to the base link 501.

The second link member 503 is provided at a proximal end (the other end) of the base link 501 and includes a second rotating shaft 503a and a second link 503b. The second link 503b is connected to the second rotating shaft 503a and rotates together with the second rotating shaft 503a around a second rotation axis Ax8, which is substantially parallel to the first rotation axis Ax7, with respect to the base link 501.

In response to an operation of the air cylinder 504, the first and second link members 502 and 503 can be rotated in directions such that distal ends of the first and second links 502b and 503b move toward or away from each other (directions shown by the one-dot chain lines in Fig. 3). In the state in which the distal ends of the first and second links 502b and 503b of the first and second link members 502 and 503, respectively, are close to each other (in the state shown by the dashed lines in Fig. 3), the distal ends of the first and second links 502b and 503b are shifted from each other in the direction of the first and second rotation axes Ax7 and Ax8 (direction perpendicular to the plane of Fig. 3).

The robot body 34 having the above-described structure may be controlled by the controller 36 so that the air cylinder 504 rotates the first and second link members 502 and 503 in directions such that the distal ends of the first and second links 502b and 503b move toward each other. Accordingly, the hand 50 holds the longitudinally intermediate portion of the noodle lump 12 that has been conveyed to the end point of the conveying path by the conveyor 20 with the first and second links 502b and 503b at a holding position. The holding position is a position where the noodle lump 12 is to be held, and is near the end point of the conveying path. In this example, the holding position is obliquely below the end point of the conveying path. The robot body 34 may also be controlled by the controller 36 so that the air cylinder 504 rotates the first and second link members 502 and 503 in directions such that the distal ends of the first and second links 502b and 503b move away from each other. Accordingly, the hand 50 releases the noodle lump 12 from the state in which the noodle lump 12 is held by the first and second links 502b and 503b at a releasing position. The releasing position is a position where the noodle lump 12 is to be released, and is located obliquely above the holding position and above the guide member 30. The turning base 42, the lower arm 44, the upper arm 46, and the wrist unit 48 cooperatively operate under the control of the controller 36 to move the hand 50 obliquely upward in a part of a path from the holding position to the releasing position. This operation will be described in detail below.

Referring to Fig. 1 again, the noodle strip receiver 26 is disposed below the holding position, which is the start point of a transporting path along which the noodle lump 12 is transported by the robot body 34. The noodle strip receiver 26 receives the leading end of the noodle lump 12 that has been conveyed to the end point of the conveying path by the conveyor 20, so that the noodle lump 12 does not fall due to its own weight.

Referring to Figs. 1 and 4, the guide member 30 is connected to the receiving member 28 at a position below the releasing position, which is the end point of the transporting path along which the noodle lump 12 is transported by the robot body 34, and above a receiving hole 28a (receiving portion) in the receiving member 28, which will be described below. The guide member 30 includes a guide outlet, 30b and a guide surface 30a provided, above the guide outlet 30b. The guide surface 30a comes into contact with the noodle lump 12 that has been transported to the above-described releasing position by the hand 50 of the robot body 34, and guides the noodle lump 12 to the receiving hole 28a in the receiving member 28, which will be described below, through the guide outlet 30b. The guide surface 30a is bent toward the downstream side in the direction in which the noodle lump 12 is transported along the transporting path from the holding position to the releasing position by the robot body 34. In this example, the guide surface 30a has a substantially V-shape in top view with the open side facing upstream in the direction the direction in which the noodle lump 12 is transported along the transporting path.

Referring to Figs. 1 and 4, the receiving member 28 has the receiving hole 28a that is located obliquely above the conveyor 20. The receiving hole 28a receives the noodle lump 12 that has slid along the guide surface 30a and passed through the guide outlet 30b of the guide member 30, and guides the noodle lump 12 into the packaging bag 14 that is retained by retaining members 32a of the packaging device 32.

The packaging device 32 includes two retaining members 32a for retaining the packaging bag 14 at the bottom of the receiving hole 28a in the receiving member 28. After the noodle lump 12 is received by the receiving hole 28a and guided into the packaging bag 14 retained by the retaining members 32a at the bottom of the receiving hole 28a, the packaging device 32 packages the noodle lump 12 in the packaging bag 14 and seals the opening of the packaging bag 14. Thus, the packaged noodle product 16 illustrated in Fig. 5 is produced.

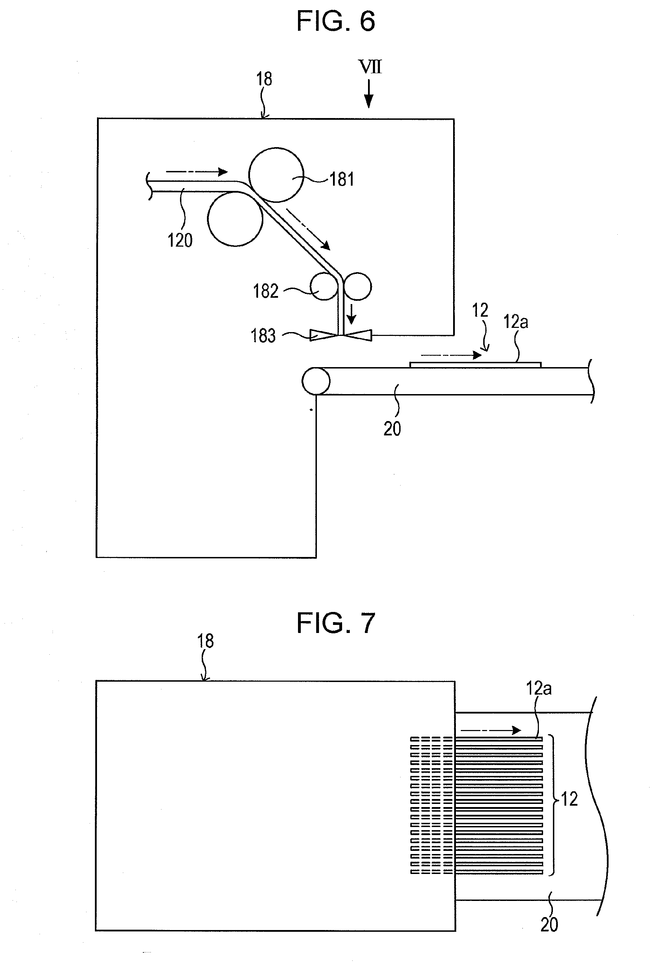

An example of a method for manufacturing the packaged noodle product 16 will now be described with reference to Figs. 6 to 14.

First, the noodle making machine 18 produces the noodle lump 12 and places the noodle lump 12 on the conveyor 20. More specifically, as illustrated in Figs. 6 and 7, the noodle sheet 120 is rolled through the pair of rollers 181. Then, the noodle sheet 120 that has been rolled through the rollers 181 is cut by the pair of cutting rollers 182 in the length direction into a plurality of noodle strips 12a having a predetermined width. Then, the thus-produced noodle strips 12a are cut by the cutter unit 183 in a width direction at a predetermined length. Thus, the noodle lump 12 including the plurality of noodle strips 12a having predetermined width and length is produced and placed on the conveyor 20. The above-described process corresponds to producing and feeding of a string-shaped object described in the claims.

Next, as illustrated in Figs. 6 and 7, the noodle lump 12 that has been produced and placed on the conveyor 20 by the noodle making machine 18 as described above is conveyed along the conveying path by the conveyor 20. This process corresponds to conveying of the string-shaped object described in the claims.

Next, the hand 50 holds the longitudinally intermediate portion of the noodle lump 12 that has been conveyed thereto at the above-described holding position, and transports the noodle lump 12 to the releasing position. In this process, the noodle lump 12 is moved obliquely upward in a part of the path to the releasing position.

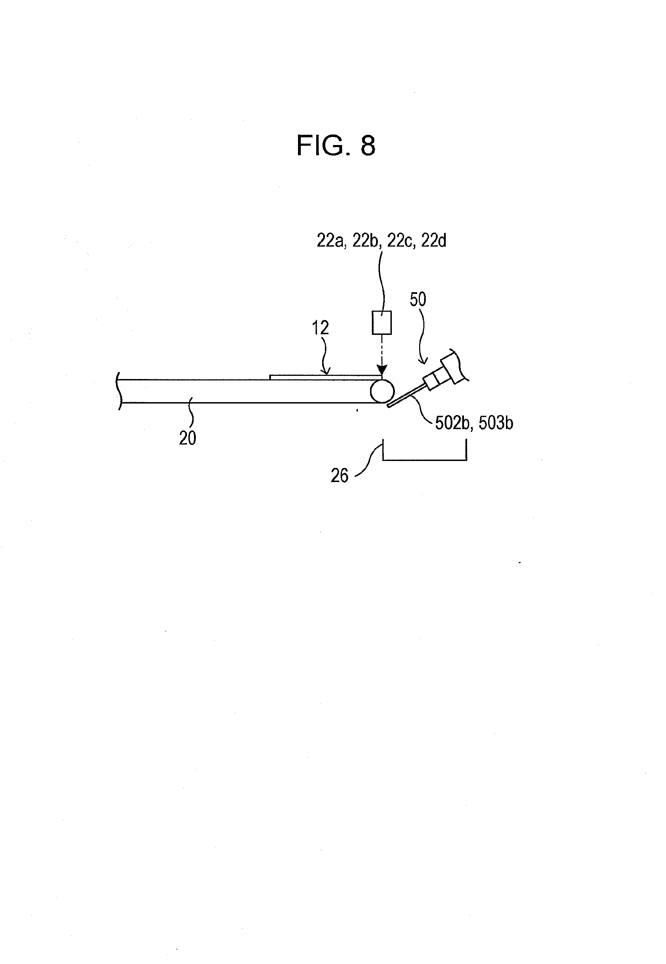

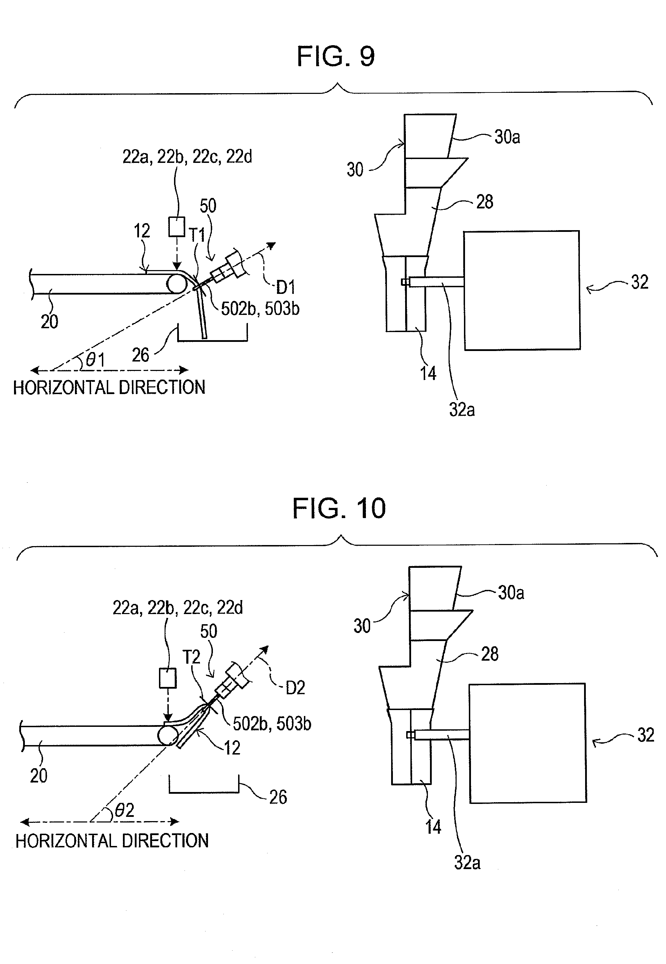

More specifically, as illustrated in Fig. 8, the turning base 42, the lower arm 44, the upper arm 46, and the wrist unit 48 of the robot body 34 cooperatively operate under the control of the controller 36 to cause the hand 50 to wait at a position near the end point of the conveying path along which the noodle lump 12 is conveyed by the conveyor 20. The hand 50 is controlled by the controller 36 so as to start the operation of holding the longitudinally intermediate portion of the noodle lump 12 at the holding position at a predetermined time after the noodle lump 12 being conveyed is detected by one of the sensors 22a to 22d (for example, after 0.3 seconds from the detection of the noodle lump 12) . At the predetermined time after the noodle lump 12 being conveyed is detected by one of the sensors 22a to 22d, as illustrated in Fig. 9, the controller 36 controls the air cylinder 504 so as to rotate the first and second link members 502 and 503 in directions such that the distal ends of the first and second links 502b and 503b move toward each other. Accordingly, the hand 50 holds the longitudinally intermediate portion of the noodle lump 12, which falls from an end of the conveyor 20 (end point of the conveying path) toward the noodle strip receiver 26 therebelow in a curved form, with the first and second links 502b and 503b at the holding position. Thus, the longitudinally intermediate portion of the noodle lump 12 is held by the first and second links 502b and 503b in a manner such that the noodle lump 12 is half folded.

Then, the turning base 42, the lower arm 44, the upper arm 46, and the wrist unit 48 cooperatively operate under the control of the controller 36 so as to move the hand 50 obliquely upward from the holding position. The hand 50 is moved in a manner such that the longitudinal direction of the first and second links 502b and 503b, which is substantially perpendicular to the first and second rotation axes Ax7 and Ax8, is at a predetermined angle θ1 (for example, 30°) with respect to the horizontal direction, and that a moving direction D1 of the hand 50 is substantially the same as the longitudinal direction of the first and second links 502b and 503b. In this example, the moving direction D1 of the hand 50 (longitudinal direction of the first and second links 502b and 503b) is substantially the same as the direction perpendicular to the tangent line T1 of a moving direction (length direction) in which the noodle lump 12 falls from the end of the conveyor 20 in a curved form.

Then, as illustrated in Fig. 10, the turning base 42, the lower arm 44, the upper arm 46, and the wrist unit 48 cooperatively operate under the control of the controller 36 so as to further move the hand 50 obliquely upward in a manner such that the longitudinal direction of the first and second links 502b and 503b is at a predetermined angle θ2 (for example, 45°) larger than the above-described angle θ1 with respect to the horizontal direction, and that a moving direction D2 of the hand 50 is substantially the same as the longitudinal direction of the first and second links 502b and 503b. In this example, the moving direction D2 of the hand 50 (longitudinal direction of the first and second links 502b and 503b) is substantially the same as the direction perpendicular to the tangent line T2 of the length direction of the noodle lump 12 that is held by the first and second links 502b and 503b in a half-folded state.

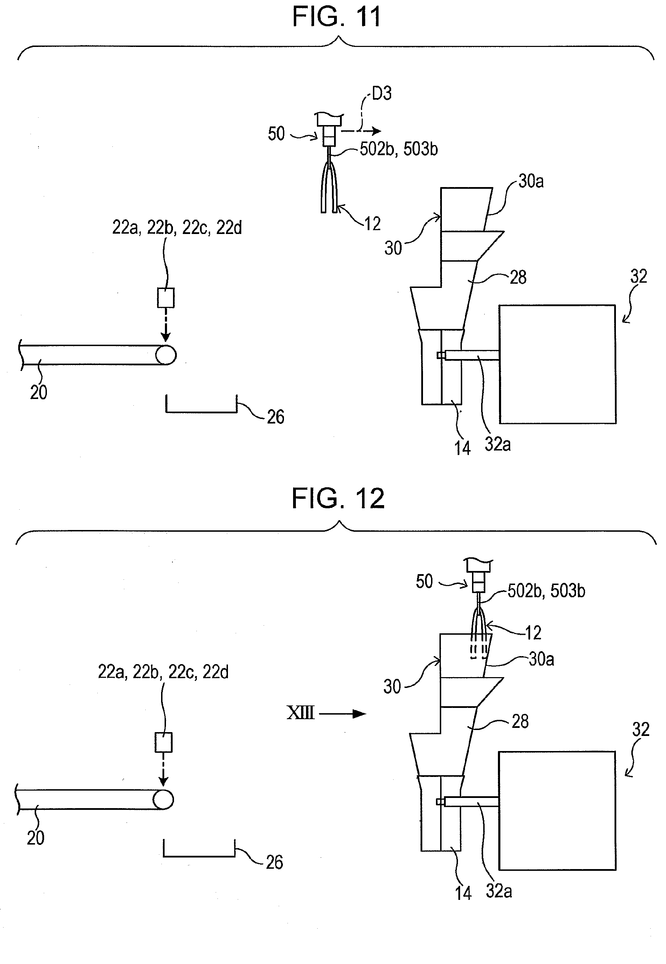

Then, as illustrated in Fig. 11, the turning base 42, the lower arm 44, the upper arm 46, and the wrist unit 48 cooperatively operate under the control of the controller 36 so as to move the hand 50 substantially horizontally to the releasing position in a manner such that the longitudinal direction of the first and second links 502b and 503b is substantially vertical and a moving direction D3 of the hand 50 is substantially horizontal.

Thus, the noodle lump 12 is moved to the releasing position. The above-described process corresponds to transporting of the string-shaped object described in the claims.

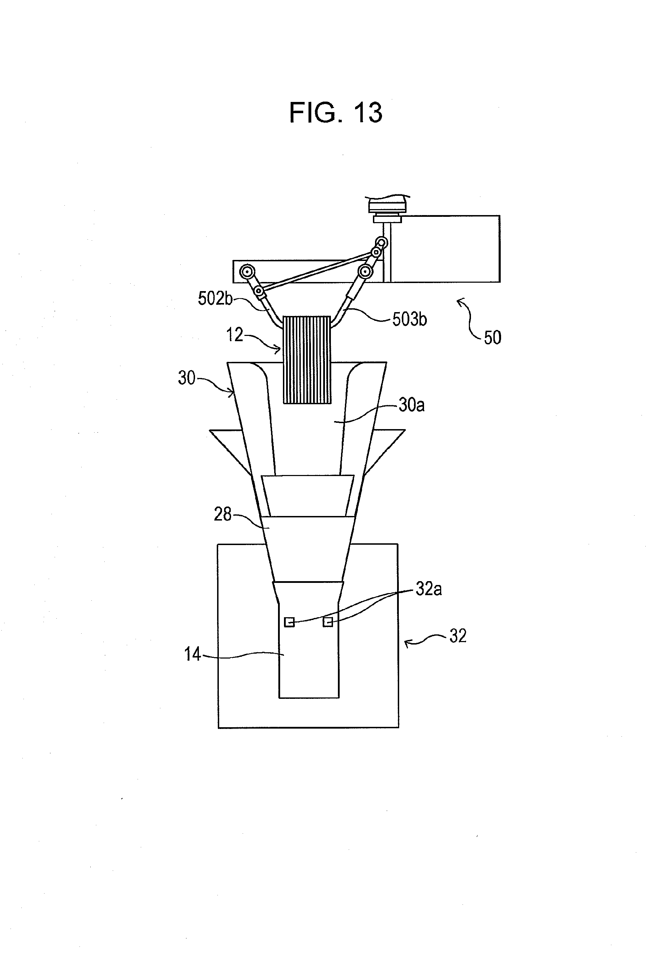

As illustrated in Figs. 12 and 13, when the noodle lump 12 is transported to the releasing position by the hand 50, the noodle lump 12 held by the first and second links 502b and 503b comes into contact with the guide surface 30a of the guide member 30. Accordingly, vibration of the noodle lump 12 caused by the inertial force at the end of the transporting process is reduced. Then, the controller 36 controls the air cylinder 504 so as to rotate the first and second link members 502 and 503 in directions such that the distal ends of the first and second links 502b and 503b move away from each other. Accordingly, the hand 50 drops the noodle lump 12 by releasing the noodle lump 12 from the state in which the noodle lump 12 is held by the first and second links 502b and 503b at the releasing position. As a result, the noodle lump 12 that has been transported to the releasing position is caused to slide along the guide surface 30a of the guide member 30 and guided into the receiving member 28 through the guide outlet 30b.

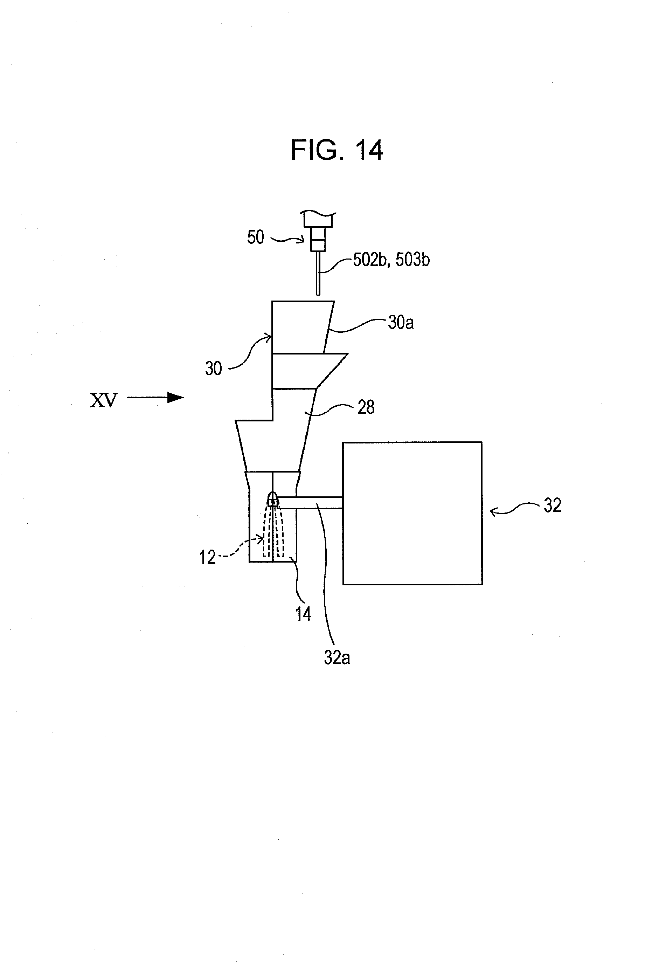

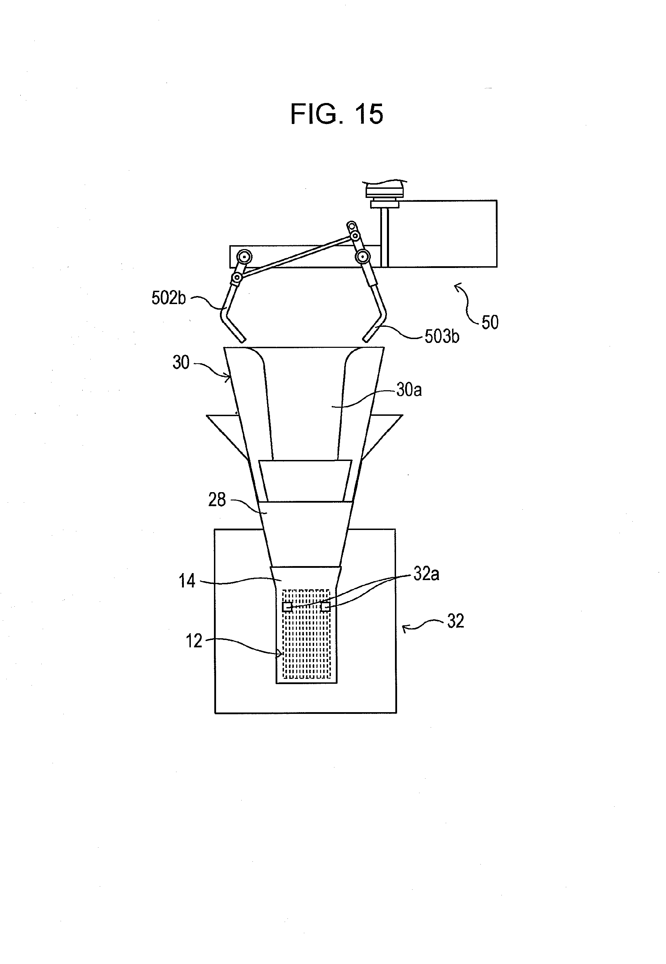

Then, as illustrated in Figs. 14 and 15, the noodle lump 12 that has been guided into the receiving member 28 through the guide outlet 30b of the guide member 30 is received by the receiving hole 28a and guided into the packaging bag 14 retained by the retaining members 32a of the packaging device 32 at the bottom of the receiving hole 28a. This process corresponds to receiving of the string-shaped object described in the claims.

After the noodle lump 12 is received by the receiving hole 28a in the receiving member 28 and guided into the packaging bag 14 retained by the retaining members 32a at the bottom of the receiving hole 28a, the noodle lump 12 is packaged in the packaging bag 14 and the opening of the packaging bag 14 is sealed. Thus, the packaged noodle product 16 is produced. This process corresponds to packaging of the string-shaped object described in the claims.

As described above, the manufacturing system 10 according to the present embodiment includes the noodle making machine 18, the conveyor 20, and the packaging device 32. The noodle lump 12, which is a lump of string-shaped noodle strips produced by the noodle making machine 18, is conveyed by the conveyor 20 and packaged in the packaging bag 14 by the packaging device 32. Thus, the packaged noodle product 16 is produced.

Before the packaging process, the noodle strips that have been conveyed by the conveyor 20 are divided into noodle lumps 12 suitable as units in which the noodle strips are sold. The noodle lumps 12 are packaged in individual packages. In the case where the dividing process is performed manually by a worker, the noodle lumps 12 are continuously conveyed by the conveyor 20 at a predetermined speed while the worker successively picks up the noodle lumps 12, each of which includes an optimum amount of noodle strips, and places each noodle lump 12 into, for example, the receiving hole 28a in the receiving member 28 located above the packaging device 32. Such work requires speed and skill. In addition, the work imposes an immense physical burden on the worker and causes great fatigue.

Accordingly, in the present embodiment, the above-described work is performed by the robot apparatus 24 instead of the worker. The robot apparatus 24 includes the robot body 34 and the controller 36 that controls the robot body 34. The robot body 34 includes the turning base 42, the lower arm 44, the upper arm 46, the wrist unit 48, and the hand 50. The controller 36 controls the hand 50 so as to hold the longitudinally intermediate portion of the noodle lump 12 that has been conveyed thereto at the holding position and transport the noodle lump 12 to the releasing position by moving obliquely upward. Then, the noodle lump 12 is released at the releasing position, so that the noodle lump 12 is dropped to the receiving hole 28a in the receiving member 28 positioned below the releasing position and reliably guided into the packaging device 32 through the receiving hole 28a. Thus, according to the present embodiment, the noodle strips conveyed by the conveyor 20 can be automatically divided into noodle lumps and transported to the packaging device 32. As a result, the workload of the worker can be reduced and the productivity can be increased.

In the case where the above-described work is manually performed, it is difficult to cause a single worker to continue working for a long time since the work imposes an immense physical burden on the worker and causes great fatigue. Therefore, a plurality of workers are caused to work in shifts or a single worker is caused to work with breaks. In contrast, according to the present embodiment, the above-described work can be automated. Therefore, the operation can be smoothly continued without causing the above-mentioned problems. As a result, the work efficiency can be increased.

According to the present embodiment, the following effects can be achieved. That is, a hand may be provided which includes two retaining members that are moved toward or away from each other in parallel directions to hold or release the noodle lump 12. With this hand, the noodle lump 12 can be held when the two retaining members are moved toward each other in parallel directions, and be released when the two retaining members are moved away from each other in parallel directions. However, there is a risk that the noodle lump 12 will be caught by the retaining members in the process of releasing the noodle lump 12 and cannot be released. Accordingly, in the present embodiment, the hand 50 includes the base link 501, the first link member 502, the second link member 503, and the air cylinder 504. The first and second link members 502 and 503 are rotated by the air cylinder 504 in directions such that the distal ends thereof move toward or away from each other. The noodle lump 12 can be held when the first and second link members 502 and 503 are rotated in directions such that the distal ends thereof move toward each other, and be released when the first and second link members 502 and 503 are rotated in directions such that the distal ends thereof move away from each other. To release the noodle lump 12 at the releasing position, the first link member 502 is rotated around the first rotation axis Ax7 with respect to the base link 501 and the second link member 503 is rotated around the second rotation axis Ax8 with respect to the base link 501. Therefore, the noodle lump 12 is not easily caught by the first and second link members 502 and 503, and the noodle lump 12 can be reliably caused to fall down from the releasing position.

In the present embodiment, in the state in which the distal ends of the first and second links 502b and 503b of the first and second link members 502 and 503, respectively, are close to each other, the distal ends of the first and second links 502b and 503b are shifted from each other in the direction of the first and second rotation axes Ax7 and Ax8. Therefore, the noodle lump 12 does not easily fall through a gap between the distal ends of the first and second links 502b and 503b when the hand 50 is being moved.

In addition, in the present embodiment, the controller 36 controls the hand 50 so as to hold the longitudinally intermediate portion of the noodle lump 12 that has been conveyed thereto by the conveyor 20 and move the noodle lump 12 obliquely upward from the holding position while the longitudinal direction of the first and second links 502b and 503b is at the above-described angle θ1 with respect to the horizontal direction. Since the noodle lump 12 is moved obliquely upward from the holding position, vibration of the noodle lump 12 that is being held can be reduced and the noodle lump 12 can be transported in a stable manner.

In addition, in the present embodiment, the controller 36 controls the hand 50 so as to move in a manner such that the moving direction is substantially the same as the longitudinal direction of the first and second links 502b and 503b in a part of the path from the holding position to the releasing position. While the hand 50 is moving through this part, the angle between the longitudinal direction of the first and second links 502b and 503b and the horizontal direction is substantially equal to the angle between the longitudinal direction of the noodle lump 12 held by the first and second links 502b and 503b and the horizontal direction. As a result, vibration of the noodle lump 12 that is being held can be reduced and the noodle lump 12 can be transported in a stable manner.

In addition, in the present embodiment, the guide member 30 is provided above the receiving hole 28a in the receiving member 28. The guide member 30 includes the guide surface 30a that comes into contact with the noodle lump 12 that has been transported to the releasing position by the hand 50. The guide surface 30a guides the noodle lump 12 to the receiving hole 28a. The guide surface 30a is bent toward the downstream side in the direction in which the noodle lump 12 is transported along the transporting path by the hand 50. When the noodle lump 12 that has been held and transported by the hand 50 comes into contact with the guide surface 30a of the guide member 30 at the releasing position, which is the end point of the transporting path, vibration of the noodle lump 12 caused by the inertial force at the end of the transporting process can be reduced. In addition, since the guide surface 30a is bent toward the downstream side in the direction in which the noodle lump 12 is transported along the transporting path by the robot body 34, the noodle lump 12 that has been brought into contact with the guide surface 30a does not easily spread apart. The noodle lump 12 can be reliably caused to fall down toward the receiving hole 28a in the receiving member 28.

In addition, in the present embodiment, the guide surface 30a of the guide member 30 has a substantially V-shape in top view with the open side facing upstream in the direction in which the noodle lump 12 is transported along the transporting path by the robot body 34. Accordingly, the noodle lump 12 that has been brought into contact with the guide surface 30a does not easily spread apart.

In addition, in the present embodiment, the four sensors 22a to 22d capable of detecting the noodle lump 12 are arranged near the conveying path along which the noodle lump 12 is conveyed by the conveyor 20. The hand 50 is controlled by the controller 36 so as to start the operation of holding the longitudinally intermediate portion of the noodle lump 12 at the holding position at a predetermined time after the noodle lump 12 is detected by one of the sensors 22a to 22d. Accordingly, the operation of holding the longitudinally intermediate portion of the noodle lump 12 that has been conveyed by the conveyor 20 with the hand 50 can be started at an optimum time. Therefore, the longitudinally intermediate portion of the noodle lump 12 can be reliably held. As a result, the noodle lump 12 can be transported in a stable manner.

The embodiment is not limited to the above description, and various modifications are possible within the scope and technical idea thereof. For example, in the above-described embodiment, the guide surface 30a of the guide member 30 has a substantially V-shape in top view with the open side facing upstream in the direction in which the noodle lump 12 is transported along the transporting path by the robot body 34. However, the guide surface 30a may have other shapes, such as a substantially U-shape in top view with the open side facing upstream in the direction in which the noodle lump 12 is transported along the transporting path by the robot body 34.

In addition, although the noodle lump 12 is packaged in the packaging bag 14 in the above-described embodiment, the noodle lump 12 may instead be packaged by using other packaging materials, such as a piece of packaging paper or a packaging film.

In the above-described embodiment, the noodle lump 12, which is a lump of noodle strips 12a produced by the noodle making machine 18 and conveyed by the conveyor 20, is transported by the robot apparatus 24. However, the object to be transported by the robot apparatus 24 is not limited to the noodle lump 12, and may instead be other types of string-shaped objects.

In addition to the above-described examples, the above-described embodiment and modifications may be applied in combination as appropriate.

Although details are not described herein, the above-described embodiment and modifications may be implemented with various alterations within the scope thereof.

It should be understood by those skilled in the art that various modifications, combinations, subcombinations and alterations may occur depending on design requirements and other factors insofar as they are within the scope of the appended claims or the equivalents thereof.

## Claims

1. A robot apparatus (24) that transports a string-shaped object (12a), the robot apparatus (24) **characterized by** comprising:
a robot arm;
a robot hand (50) provided on the robot arm, the robot hand (50) holding or releasing a longitudinally intermediate portion of the string-shaped object (12a); and
a controller (36) that controls operations of the robot arm and the robot hand (50),
wherein the controller (36) controls the robot arm so that the robot hand (50) moves obliquely upward at least in a part of a path from a holding position at which the string-shaped object (12a) is held to a releasing position at which the string-shaped object (12a) is released.

2. The robot apparatus (24) according to Claim 1, wherein the robot hand (50) includes
a base link (501) connected to the robot arm,
a first link member (502) provided at one end of the base link (501) and capable of rotating around a first rotation axis (Ax7) with respect to the base link (501),
a second link member (503) provided at the other end of the base link (501) and capable of rotating around a second rotation axis (Ax8) with respect to the base link (501), the second rotation axis (Ax8) being parallel to the first rotation axis (Ax7), and
an actuator (504) configured to rotate the first link member (502) and the second link member (503), and
wherein the first link member (502) and the second link member (503) are capable of being rotated by the actuator (504) in directions such that distal ends thereof are moved toward and away from each other.

3. The robot apparatus (24) according to Claim 2, wherein the first link member (502) of the robot hand. (50) includes
a first rotating shaft (502a) that rotates around the first rotation axis (Ax7) with respect to the base link (501), and
a first link (502b) connected to the first rotating shaft (502a),
wherein the second link member (503) of the robot hand (50) includes
a second rotating shaft (503a) that rotates around the second rotation axis (Ax8) with respect to the base link (501), and
a second link (503b) connected to the second rotating shaft (503a), and
wherein the first link member (502) and the second link member (503) are arranged so that in the state in which distal ends of the first link (502b) and the second link (503b) are close to each other, the distal ends of the first link (502b) and the second link (503b) are shifted from each other in the direction of the first rotation axis (Ax7) and the second rotation axis (Ax8).

4. The robot apparatus (24) according to Claim 2 or 3, wherein the controller (36) controls the robot arm so that the robot hand (50) holds the longitudinally intermediate portion of the string-shaped object (12a) with the first link member (502) and the second link member (503) at the holding position, and then moves obliquely upward from the holding position while a direction perpendicular to the first rotation axis (Ax7) and the second rotation axis (Ax8) is at a predetermined angle with respect to the horizontal direction.

5. The robot apparatus (24) according to Claim 4,
wherein the controller (36) controls the robot arm so that a direction in which the robot hand (50) moves in the part of the path is the same as the direction perpendicular to the first rotation axis (Ax7) and the second rotation axis (Ax8).

6. A robot system (10) that transports a string-shaped object (12a), the robot system (10) **characterized by** comprising:
a conveying device (20) that conveys the string-shaped object (12a) in a certain direction;
a robot apparatus (24) that transports the string-shaped object (12a) conveyed by the conveying device (20) in the certain direction; and
a receiving portion (28a) arranged downstream of the conveying device (20) in the certain direction and above the conveying device (20), the receiving portion (28a) receiving the string-shaped object (12a) transported by the robot apparatus (24).

7. The robot system (10) according to Claim 6, wherein the robot apparatus (24) includes
a robot arm;
a robot hand (50) provided on the robot arm, the robot hand (50) holding or releasing a longitudinally intermediate portion of the string-shaped object (12a); and
a controller (36) that controls operations of the robot arm and the robot hand (50), and
wherein the controller (36) controls the robot hand (50) so as to hold the longitudinally intermediate portion of the string-shaped object (12a) at a holding position at which the string-shaped object (12a) is held, the holding position being positioned downstream of a downstream end of the conveying device (20) in the certain direction.

8. The robot system (10) according to Claim 6 or 7, further comprising:
a production apparatus (18) that produces the string-shaped object (12a) and feeds the string-shaped object (12a) to the conveying device (20); and
a packaging device (32) that produces a packaged product (16) of the string-shaped object (12a) by packaging the string-shaped object (12a) received by the receiving portion (28a) with a packaging material (14).

9. The robot system (10) according to any one of Claims 6 to 8, further comprising:
a guide member disposed above the receiving portion (28a),
wherein the guide member includes a guide surface that comes into contact with the string-shaped object (12a) transported to a releasing position at which the robot hand (50) releases the string-shaped object (12a), the guide surface guiding the string-shaped object (12a) to the receiving portion (28a) and being bent toward a downstream side in a direction in which the string-shaped object (12a) is transported along a transporting path by the robot apparatus (24).

10. The robot system (10) according to Claim 9, wherein the guide surface of the guide member has a V-shape in top view with the open side facing upstream in the direction in which the string-shaped object (12a) is transported along the transporting path by the robot apparatus (24).

11. The robot system (10) according to Claim 7, further comprising: ,
at least one sensor (22a, 22b, 22c, 22d) capable of detecting the string-shaped object (12a), the sensor (22a, 22b, 22c, 22d) being arranged near a conveying path along which the string-shaped object (12a) is conveyed by the conveying device (20),
wherein the controller (36) controls the robot hand (50) so as to start an operation of holding the longitudinally intermediate portion of the string-shaped object (12a) at the holding position at a predetermined time after the string-shaped object (12a) is detected by the sensor (22a, 22b, 22c, 22d).

12. A method for manufacturing a packaged product (16) of a string-shaped object (12a) by packaging the string-shaped object (12a) with a packaging material (14), the method **characterized by** comprising:
producing and feeding the string-shaped object (12a);
conveying the string-shaped object (12a) that has been produced and fed in a certain direction;
transporting the string-shaped object (12a) with a robot hand (50) from a holding position at which the string-shaped object (12a) is held to a releasing position at which the string-shaped object (12a) is released and which is positioned downstream of the holding position in the certain direction and above the holding position, the transporting of the string-shaped object (12a) including
holding a longitudinally intermediate portion of the string-shaped object (12a) that has been conveyed in the certain direction at the holding position, and
moving the string-shaped object (12a) that has been held obliquely upward at least in a part of a path from the holding position to the releasing position;
receiving the string-shaped object (12a) that has been transported through a receiving portion (28a) positioned below the releasing position; and
packaging the string-shaped object (12a) that has been received through the receiving portion (28a) with the packaging material (14) to form the packaged product (16) of the string-shaped object (12a).
